# EUROPEAN PATENT SPECIFICATION

(11) **EP 2 090 455 B1**
(45) Date of publication and mention of the grant of the patent: **28.11.2012**
(21) Application number: 09250315.0
(22) Date of filing: 09.02.2009
(51) Int. Cl.: B60K 31/04, B60W 30/19, B60K 31/00

(54) **Vehicle speed limiting device**
Geschwindigkeitseingrenzungsvorrichtung für ein Fahrzeug
Dispositif de limitation de la vitesse d'un véhicule

(30) Priority: 12.02.2008 JP 2008030530
(43) Date of publication of application: 19.08.2009
(73) Proprietor: Toyota Jidosha Kabushiki Kaisha, Toyota-shi, Aichi-ken 471-8571 (JP)
(72) Inventor: Nakane, Yoshihide c/o Toyota Jidosha Kabushiki Kaisha, Toyota-shi Aichi-Ken 471-8571 (JP)
(74) Representative: Albutt, Anthony John

(56) References cited:
- EP-A1- 1 898 130
- EP-A2- 1 925 487
- JP-A- 2004 293 371

## Description

### BACKGROUND OF THE INVENTION

The present invention relates to a vehicle speed limiting device that limits the power output of an engine such that the travel speed of a vehicle does not exceed an upper speed limit.

In many cases, a vehicle such as an automobile has an internal combustion engine as a driving source and a transmission having a plurality of gears. Such a vehicle has a clutch mechanism between the internal combustion engine and the transmission, and a clutch manipulation member (such as a clutch pedal) for switching the operating state of the clutch mechanism between an engaged state and a disengaged state. In the engaged state, power is transmitted between the output shaft of the internal combustion engine and the transmission, and such power transmission does not take place in the disengaged state. When the clutch manipulation member is manipulated to temporarily switch the operating state of the clutch mechanism to the disengaged state, the gear of the transmission can be changed.

In recent years, vehicle speed limiting devices have been developed to avoid traveling of vehicles at speeds exceeding the upper speed limit set by law. Such a vehicle speed limiting device limits the power output of an engine in accordance with the relationship between the upper speed limit and the travel speed of the vehicle, such that travel speed does not exceed the set upper speed limit.

In a vehicle equipped with such a vehicle speed limiting device, if the engine power output is limited at shifting of gears of the transmission, it is possible that the shifting of gears cannot be properly performed. For example, the shift shock increases.

Accordingly, a type of vehicle speed limiting device according to the preamble of claims 1, 5 and 8 is disclosed in JP 2004 29 3371 A and has conventionally been developed that, when the clutch manipulation member is being manipulated, determines that the transmission gears are being changed and cancels the limitation on the travel speed of a vehicle. At shifting of gears of a transmission, such a device is capable of adjusting the torque of an engine such that the rotational speed of the engine output shaft becomes suitable for the shifting of gears. The gears are therefore shifted properly.

Even if the driver manipulates the clutch manipulation member to switch the operating state of the clutch mechanism from the engaged state to the disengaged state, the operating state of the clutch mechanism remains engaged when the driver is only lightly touching the clutch manipulation member or when the clutch manipulation member is manipulated by a significantly small amount.

Even in these cases, the above described vehicle speed limiting device determines that the clutch manipulation member is being manipulated and cancels the limitation on the vehicle travel speed. This can cause the vehicle to travel at a speed exceeding the upper limit speed.

### SUMMARY OF THE INVENTION

Accordingly, it is an objective of the present invention to provide a vehicle speed limiting device that properly shifts the gear of a transmission and reliably limits the travel speed of a vehicle.

The foregoing objective is achieved with an apparatus for limiting the speed of a vehicle according to claims 1, 5 and 8.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagram schematically showing the configuration of a vehicle in which a vehicle speed limiting device according to one embodiment of the present invention is used;
Fig. 2 is a flowchart showing concrete processes of an execution determination procedure of the embodiment shown in Fig. 1; and
Fig. 3 is a diagram showing the relationship between selected transmission gears and the ratio between engine rotational speed and vehicle speed.

### DETAILED DESCRIPTION OF THE PREFERRED EMBODIMENTS

A vehicle speed limiting device according to one embodiment of the present invention will now be described.

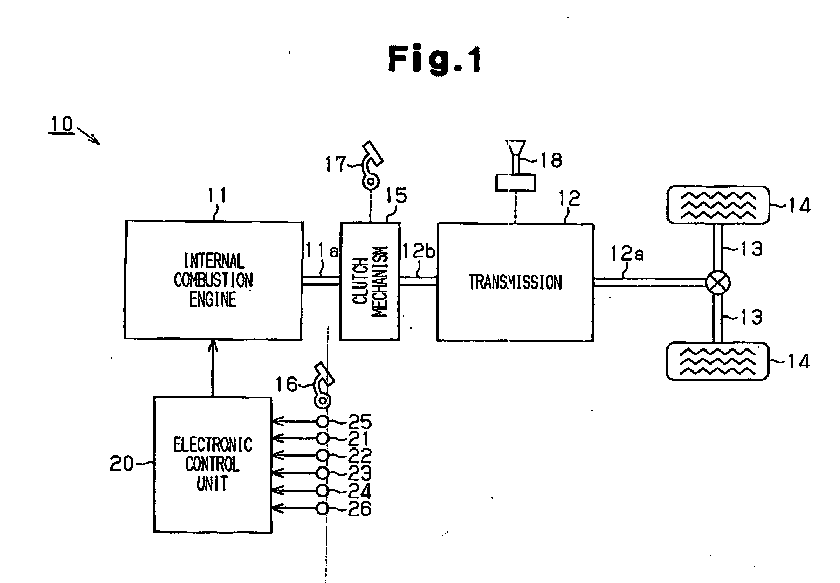

Fig. 1 schematically illustrates the configuration of a vehicle in which the vehicle speed limiting device of the present embodiment is used.

The vehicle 10 has an internal combustion engine 11 serving as a driving source and a transmission 12 with a plurality of gears (five gears in the present embodiment). An output shaft 12a of the transmission 12 is coupled to axles 13 and wheels 14. The vehicle 10 also has a clutch mechanism 15. An output shaft 11a of the engine 11 and an input shaft 12b of the transmission 12 are connected to each other by the clutch mechanism 15.

When the operating state of the clutch mechanism 15 is a state for performing power transmission, that is, an engaged state, rotation of the output shaft 11a of the internal combustion engine 11 is transmitted to the transmission 12, the axles 13, and the wheels 14 in the order. In contrast, when the operating state of the clutch mechanism 15 is a state for performing no power transmission, that is, a disengaged state, rotation of the output shaft 11a of the internal combustion engine 11 is not transmitted to the transmission 12, the axles 13, or the wheels 14.

The vehicle 10 has an accelerator pedal 16 for adjusting the power output of the engine 11 (engine power output). When the accelerator pedal 16 is depressed by the driver, the engine power output is increased.

The vehicle 10 also has a clutch pedal 17 for switching the operating state of the clutch mechanism 15 between the engaged state and disengaged state. When the clutch pedal 17 is not depressed, the operating state of the clutch mechanism 15 is the engaged state. When the clutch pedal 17 is depressed, the operating state of the clutch mechanism 15 is the disengaged state. When the clutch pedal 17 is depressed by the driver, the operating state of the clutch mechanism 15 temporarily becomes the disengaged state. This allows the gear of the transmission 12 to be shifted.

The vehicle 10 has a shift lever 18 for shifting the gear of the transmission 12. The driver manipulates the shift lever 18 to shift the gear of the transmission 12 to a selected gear.

The vehicle 10 has various sensors for detecting its driving state. These sensors include a vehicle speed sensor 21 that detects the travel speed of the vehicle 10, more specifically, the rotational speed of the wheels 14, an acceleration sensor 22 that detects the acceleration G of the vehicle 10, and a crank sensor 23 that detects the rotational speed of the output shaft 11a of the engine 11 (the engine rotational speed NE). Also provided are an accelerator manipulation amount sensor 24 that detects the depression amount of the accelerator pedal 16 (accelerator manipulation amount ACC), and a clutch sensor 25 serving as detection means that detects whether the clutch pedal 17 is being depressed. Further, various switches such as a setting switch 26 are provided. The setting switch 26 is used for setting various parameters regarding vehicle speed limiting control, which will be described below.

The vehicle 10 is also provided with an electronic control unit 20 including, for example, a microcomputer. The electronic control unit 20 receives output signals of the sensors and switches, and executes various calculations. Based on the results of the calculations, the electronic control unit 20 performs various types of control related to the operation of the Vehicle 10, such as control for adjusting the engine power output and vehicle speed control.

In the adjusting control of the engine power output, the amount of fuel supplied to combustion chambers (not shown) of the engine 11 is adjusted based on the accelerator manipulation amount ACC and the engine rotational speed NE. Accordingly, the engine output power is adjusted in accordance with the running state of the vehicle 10 and the engine 11.

The vehicle speed limiting control is control for limiting the vehicle speed SPD such that it does not exceed an upper speed limit Lim. Selection between the execution (activation) and cancellation (deactivation) of the vehicle speed control and the setting of the upper speed limit Lim are performed through manipulation of the setting switch 26. In the vehicle speed limiting control, when the vehicle speed SPD is higher than the upper speed limit Lim, or when the vehicle speed SPD is likely to eventually exceed the upper speed limit Lim, the engine power output is limited by such an amount that the vehicle speed SPD is limited to a value lower than or equal to the upper speed limit Lim, in accordance with the relationship between the upper speed limit Lim and the vehicle speed SPD. In the present embodiment, the electronic control unit 20 executing the vehicle speed limiting control functions as vehicle speed limiting means.

When a predetermined cancellation condition is met, it is determined that the gear of the transmission 12 is being shifted, and the vehicle speed limiting control is cancelled. Accordingly, a situation is avoided in which the engine power output is limited during shifting of the gear of the transmission 12 and the shifting is not properly executed.

Conventionally, a clutch condition (condition I discussed below) is set as a cancellation condition. The clutch condition refers to a condition in which the output signal of the clutch sensor 25 indicates that the clutch pedal 17 is being depressed. When the clutch condition is met, the vehicle speed limiting control is cancelled. However, even in a case where it is determined that the clutch pedal 17 is being depressed based on the output signal of the clutch sensor 25, that is, even in a case where the clutch condition is met, the operating state of the clutch mechanism 15 remains in the engaged state in some cases if the driver is only lightly touching the clutch pedal 17 or if the manipulation amount of the clutch pedal 17 is significantly small.

Therefore, if the vehicle speed limiting control is cancelled based only on the fact that the clutch condition is met, the vehicle speed limiting control will be cancelled in some cases even when the operating state of the clutch mechanism 15 is actually the engaged state. If the accelerator pedal 16 is depressed in this situation, the vehicle speed SPD might exceed the upper speed limit Lim.

In this respect, the cancellation condition of the present embodiment includes, in addition to the clutch condition, a predetermined additional condition for determining that the gear of the transmission 12 is being shifted. The vehicle speed limiting control is cancelled when the clutch condition and the additional condition are all met.

Hereafter, a procedure for executing and cancelling the vehicle speed limiting control, or an execution determination procedure, will be described. In the present embodiment, the electronic control unit 20 executing the execution determination procedure functions as cancelling means.

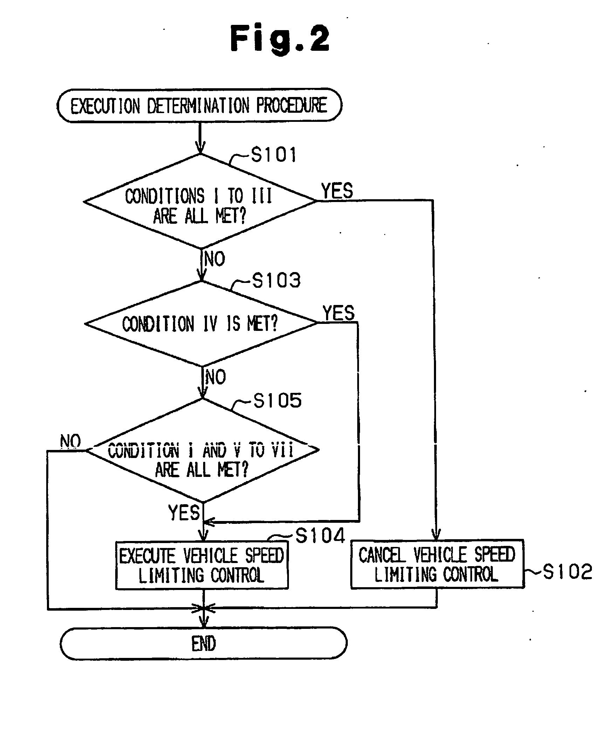

Fig. 2 is a flowchart showing concrete processes of the execution determination procedure. The series of processes shown in the flowchart is executed by the electronic control unit 20 at predetermined intervals when the execution of the vehicle speed limiting control is selected through manipulation of the setting switch 26.

In the procedure, it is determined whether conditions I to III, which collectively serve as the cancelation condition, are all met (step S101).

Condition I: it is determined that the clutch pedal 17 is being depressed based on an output signal of the clutch sensor 25.

Condition II: the accelerator manipulation amount ACC is less than a predetermined amount Aa. The predetermined amount Aa is set to a value slightly greater than the value of the accelerator manipulation amount ACC when the accelerator pedal 16 is not depressed (specifically, zero). In the present embodiment, the predetermined amount Aa corresponds to a second predetermined amount.

Condition III: the acceleration G of the vehicle 10 is less than a predetermined value Ga. The predetermined value Ga is set to a value that is slightly greater than zero. In the present embodiment, the predetermined value Ga corresponds to a second predetermined value.

When the conditions I to III are all met (step S101: YES), it is determined that the gear of the transmission 12 is being shifted, and the vehicle speed limiting control is cancelled (step S102). Then, the procedure is temporarily suspended.

If any one or more of the conditions I to III is not met (step S101: NO), it is determined whether the following condition IV is met (step S103).

Condition IV: it is determined that the clutch pedal 17 is not being depressed based on an output signal of the clutch sensor 25.

When the condition IV is met (step S103: YES), it is determined that the gear of the transmission 12 is not being shifted, and the vehicle speed limiting control is executed (step S104). Then, the procedure is temporarily suspended. That is, the vehicle speed limiting control is activated so that the engine power output is limited as necessary to prevent the vehicle speed SPD from exceeding the upper speed limit Lim.

On the other hand, if the condition IV is not met (step S103: NO), it is determined whether the above condition I and the following conditions V to VII are all met (step S105).

Condition V: the accelerator manipulation amount ACC is greater than a predetermined amount Ab (where Ab > Aa). In the present embodiment, the predetermined amount Ab corresponds to a first predetermined amount.

Condition VI: the acceleration G of the vehicle 10 is greater than a predetermined value Gb (where Gb > Ga). In the present embodiment, the predetermined value Gb corresponds to a first predetermined value.

Condition VII: the absolute value of (A - B)/B is less than or equal to a predetermined value. The value A is the actual value of the engine rotational speed NE divided by the vehicle speed SPD (NE/SPD), and the value B is the engine rotational speed NE divided by the vehicle speed SPD (NE/SPD) in a case where the operating state of the clutch mechanism 15 causes the output shaft 11a of the engine 11 and the input shaft 12b of the transmission 12 to rotate integrally.

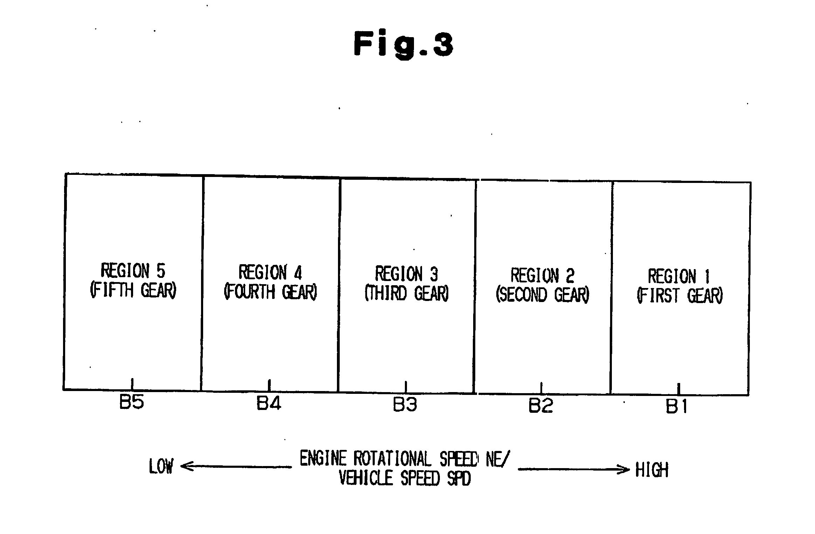

The value B is changed according to the gear of the transmission 12. Thus, at step S105, one of a plurality of values B, which are set for each gear and stored, is selected in correspondence with the gear selected at the time. At step S105, the currently selected gear is estimated based on the relationship between the engine rotational speed NE and the rotational speed of the output shaft 12a of the transmission 12 (specifically, the vehicle speed SPD, which is correlated to the rotational speed of the output shaft 12a). Specifically, as shown in Fig. 3, the range of possible values of the engine rotational speed NE/the vehicle speed SPD is divided into five regions, or region 1 to region 5. A gear that corresponds to the region including the current actual value of the engine rotational speed NE/the vehicle speed SPD is obtained as the currently selected gear. The region 1 is a region that includes a value B1 corresponding to the value B when the first gear is selected. The region 2 is a region that includes a value B2 corresponding to the value B when the second gear is selected. The region 3 is a region that includes a value B3 corresponding to the value B when the third gear is selected. Also, the region 4 is a region that includes a value B4 corresponding to the value B when the fourth gear is selected. The region 5 is a region that includes a value B5 corresponding to the value B when the fifth gear is selected.

When the conditions I and V to VII are all met (step S105: YES), it is determined that the gear of the transmission 12 is not being shifted, and the vehicle speed limiting control is executed (step S104). Then, the procedure is temporarily suspended.

If any one or more of the conditions I to III is not met, (step S101: NO), the condition IV is not met (step S103: NO), and any one or more of the conditions I and V to VII is not met (step S105: NO), either, the current state is maintained and the procedure is temporarily suspended. That is, in this case, if the vehicle speed limiting control is being executed, the execution is continued, and if the vehicle speed limiting control has been cancelled, the cancellation is continued.

Hereafter, the effects of the execution of the execution determination procedure will be described in connection with shifting of the gear of the transmission 12.

Normally, the gear of the transmission 12 is shifted in the following manner. That is, the clutch pedal 17 is depressed with depressing of the accelerator pedal 16 interrupted, so that the operating state of the clutch mechanism 15 is switched to the disengaged state. Thereafter, the shift lever 18 is manipulated to shift the gear. Therefore, at the beginning of shifting of the gear, the clutch pedal 17 is in a depressed state and the accelerator pedal 16 is in a non-depressed state. Also, the acceleration G of the vehicle becomes small.

In the present embodiment, even if it is determined based on an output signal of the clutch sensor 25 that the clutch pedal 17 is being depressed, it is not determined that the gear starts being shifted unless the accelerator manipulation amount ACC falls below the predetermined amount Aa and the acceleration G of the vehicle 10 falls below the predetermined value Ga. In this case, the vehicle speed limiting control is executed.

Thus, when the vehicle 10 is being accelerated by depression of the accelerator pedal 16, the vehicle speed limiting control is continued if the driver is lightly touching the clutch pedal 17 or if the manipulation amount of the clutch pedal 17 is significantly small. The vehicle speed SPD is therefore reliably prevented from exceeding the upper speed limit Lim.

During shifting of the gear of the transmission 12, the clutch pedal 17 is being depressed and the operating state of the clutch mechanism 15 is the disengaged state. The engine power output is therefore not transmitted to the transmission 12. Thus, if the accelerator pedal 16 is depressed in order to increase the engine power output, the vehicle 10 is not accelerated. On the other hand, when the clutch pedal 17 is not depressed or is lightly depressed, the operating state of the clutch mechanism 15 is the engaged state. In this state, the vehicle 10 is accelerated as the accelerator pedal 16 is depressed.

In the present embodiment, even if it is determined based on an output signal of the clutch sensor 25 that the clutch pedal 17 is being depressed (step S103 in Fig. 2: NO), it is determined that the gear stops being shifted if the accelerator manipulation amount ACC is greater than the predetermined amount Ab and the acceleration G of the vehicle 10 is greater than the predetermined value Gb. Thereafter, the vehicle speed limiting control is executed.

As described above, the fact that the transmission 12 stops being shifted is accurately detected by determining whether the accelerator pedal 16 is depressed and the vehicle 10 starts being accelerated. Therefore, even before it is determined that the clutch pedal 17 is not depressed, it is determined that the gear of the transmission 12 stops being shifted based on the accelerator manipulation amount ACC and acceleration G of the vehicle 10. In the period thereafter, the vehicle speed limiting control is executed. Thus, in this period, even if the clutch pedal 17 is slightly depressed, the vehicle speed SPD is prevented from exceeding the upper speed limit Lim.

Also, in the present embodiment, after it is determined that the gear of the transmission 12 starts being shifted, that is, in a state where there is history showing that the accelerator manipulation amount ACC has fallen below the predetermined amount Aa, it is determined that the gear stops being shifted when the accelerator manipulation amount ACC exceeds the predetermined amount Ab and the acceleration G of the vehicle 10 exceeds the predetermined value Gb. Specifically, after it is determined that the gear starts being shifted based on the determination of YES at step S101 in Fig. 2, it is determined that the gear stops being shifted when the determination of YES is made at step S105.

Accordingly, after it is determined the gear starts being shifted, it is determined that the vehicle 10 starts being accelerated when the accelerator pedal 16 is depressed at least from the predetermined amount Aa to the predetermined amount Ab. This enables an accurate detection of the fact that the gear stops being shifted.

When the clutch pedal 17 is not depressed, the clutch mechanism 15 is in the engaged state. Therefore, a direct relationship is established among the engine rotational speed NE, the rotational speed of the output shaft 12a of the transmission 12, and the selected gear of the transmission 12. On the other hand, when the clutch pedal 17 is being depressed, the clutch mechanism 15 is in the disengaged state. The relationship is different from that in the case where the operating state of the clutch mechanism 15 is in the engaged state.

In the present embodiment, it is determined that the gear stops being shifted when, in addition to the fact that the conditions I, V, and VI are all met, there is a small difference between the actual state of the above described relationship and a relationship that would be established if the operating state of the clutch mechanism 15 is in the engaged. Specifically, when the condition VII is met, it is determined that the gear stops being shifted. Thereafter, the vehicle speed limiting control is executed.

Accordingly, the fact that the gear stops being shifted is accurately detected based on the relationship among the engine rotational speed NE, the rotational speed of the output shaft 12a of the transmission 12, and the selected gear of the transmission 12.

As described above, in the present embodiment, when, in addition to the clutch condition for determining that the clutch pedal 17 is being manipulated, the additional condition for determining that the gear of the transmission 12 is being shifted is met, it is determined that the gear is being shifted, and the vehicle speed limiting control is cancelled. In the present embodiment, the state in which the predetermined additional condition is met refers to a state in which, after the conditions II and III are met, the condition IV is not met and any one or more of the conditions V to VII is not met. Also, in the present embodiment, the electronic control unit 20 executing steps S101 and S105 in Fig. 2 corresponds to determination means that determines that the gear is being shifted when the predetermined condition is met.

Through the execution of the execution determination procedure, the vehicle speed limiting control is prevented from being unnecessarily cancelled when the driver is lightly touching the clutch pedal 17 or when the depression amount of the clutch pedal 17 is significantly small. That is, when it is determined that the clutch pedal 17 is being depressed despite the fact that the gear is not being shifted, the vehicle speed limiting control is not unnecessarily stopped.

Therefore, according to the present embodiment, compared to the configuration in which the vehicle speed limiting control is cancelled only when it is determined that the clutch pedal 17 is being manipulated based on an output signal of the clutch sensor 25, the vehicle speed limiting control is reliably cancelled when it is accurately determined that the gear is being shifted. This allows the gear to be properly shifted.

Further, the vehicle speed limiting control is executed when the predetermined additional condition is not met in a state where it is determined that the clutch pedal 17 is being manipulated (step S105: YES), that is, when it is unlikely that the gear is being shifted. The vehicle speed SPD in this state is reliably limited.

As described above, the present embodiment provides the following advantages.
(1) When the clutch condition and the predetermined additional condition are met, the vehicle speed limiting control is cancelled (invalidated). Thus, while the gear is being shifted, the vehicle speed limiting control is reliably executed, and the gear is properly shifted. Further, the vehicle speed limiting control is executed when the predetermined additional condition is not met in a state where it is determined that the clutch pedal 17 is being manipulated (step S105: YES), that is, when it is unlikely that the gear is being shifted. The vehicle speed SPD in this state is reliably limited.
(2) It is possible to accurately determine that the gear stops being shifted based on the accelerator manipulation amount ACC and acceleration G of the vehicle 10.
(3) After it is determined that the gear starts being shifted (in a state where there is history showing that the accelerator manipulation amount ACC has fallen below the predetermined amount Aa), it is determined that the gear stops being shifted when the accelerator manipulation amount ACC exceeds the predetermined amount Ab and the acceleration G of the vehicle 10 exceeds the predetermined value Gb. Therefore, after it is determined the gear of the transmission 12 starts being shifted, it is determined that the vehicle 10 starts being accelerated when the accelerator pedal 16 is depressed at least from the predetermined amount Aa to the predetermined amount Ab. This enables accurate detection of the fact that the gear stops being shifted.
(4) The accelerator manipulation amount ACC being less than the predetermined amount Aa is included in the conditions for determining that the gear starts being shifted. Therefore, even if it is determined that the clutch pedal 17 is being manipulated when the vehicle 10 is being accelerated by depression of the accelerator pedal 16, the vehicle speed limiting control is not cancelled. Thus, the vehicle 10 is prevented from being accelerated, so that the vehicle speed SPD does not exceed the upper speed limit Lim. The vehicle speed SPD is reliably limited. Further, when it is determined that the clutch pedal 17 is being manipulated in a state where the accelerator manipulation amount ACC is small, the vehicle speed limiting control is cancelled even if the gear starts being shifted. This allows the gear to be properly shifted.
(5) The vehicle acceleration G being less than the predetermined value Ga is included in the conditions for determining that the gear starts being shifted. Therefore, even if it is determined that the clutch pedal 17 is being manipulated when the acceleration G of the vehicle 10 is great, the vehicle speed limiting control is not cancelled. Thus, the vehicle 10 is prevented from being accelerated, so that the vehicle speed SPD does not exceed the upper speed limit Lim. The vehicle speed SPD is reliably limited. Further, when it is determined that the clutch pedal 17 is being manipulated in a state where the acceleration G of the vehicle 10 is small, the vehicle speed limiting control is cancelled even if the gear starts being shifted. This allows the gear to be properly shifted.
(6) It is accurately determined that the gear stops being shifted based on changes of the relationship among the engine rotational speed NE, the vehicle speed SPD, and the gear selected in the transmission 12.

The above embodiment may be modified as follows.

The above embodiment may be applied to a vehicle that is provided with an accelerator for adjusting the engine power output other than the accelerator pedal 16, for example, to a vehicle provided with an accelerator lever.

The above embodiment may be applied to a vehicle that is provided with a clutch manipulation portion for switching the operating state of the clutch mechanism 15 other than the clutch pedal 17, for example, to a vehicle provided with a clutch lever or a clutch switch.

The sensor for detecting the vehicle speed SPD is not limited to the vehicle speed sensor 21, which detects the rotational speed of the wheels 14. For example, as a sensor for detecting the vehicle speed SPD, a rotational speed sensor for detecting the rotational speed of the axles 13 or a rotational speed sensor for detecting the rotational speed of the output shaft 12a of the transmission 12 may be used.

The condition VII regarding the relationship among the engine rotational speed NE, the vehicle speed SPD, and the gear selected in the transmission 12 may be changed as necessary as long as it is possible to determine that there is a small difference between the actual relationship and a relationship that would be established when assuming that the operating state of the clutch mechanism 15 is such that the output shaft 11a of the internal combustion engine 11 and the input shaft 12b of the transmission 12 rotate integrally. Specifically, the following conditions VIII and IX may be set in place of the condition VII.
Condition VIII: the absolute value of (A - B)/A is less than or equal to a predetermined value.
Condition IX: the ratio between A and B (A/B or B/A) is in a predetermined range including 1.0.

In estimation of the gear, instead of the vehicle speed SPD, which is correlated with the rotational speed of the output shaft 12a of the transmission 12, the rotational speed of a member that is coupled to and rotates integrally with the output shaft 12a may be used. For example, the rotational speed of the axles 13 or the wheels 14 may be used. Instead of the vehicle speed SPD, the rotational speed of the output shaft 12a of the transmission 12 may be used to estimate the gear. In short, by estimating the gear based on an index value of the rotational speed of the output shaft 12a of the transmission 12 (that is, the rotational speed of the output shaft 12a or a parameter correlated with it), the selected gear at the time is accurately estimated.

The method for estimating the selected gear may be changed as necessary. For example, the range of possible values of the vehicle speed SPD/the engine rotational speed NE is divided into five regions, and a gear that corresponds to the region including the current value of the vehicle speed SPD/the engine rotational speed NE is obtained as the currently selected gear.

In stead of estimating the selected gear at the time, a shift sensor for detecting the selected gear may be provided in the vicinity of the transmission 12 or the shift lever 18, so that the selected gear at the time is detected by the shift sensor.

As a condition for determining that the gear stops being shifted, the condition that the accelerator manipulation amount ACC is greater than the predetermined amount Ab and the vehicle acceleration G is greater than the predetermined value Gb is used in the illustrated embodiment. However, as such a condition, it is possible to use a condition that the vehicle acceleration G exceeds the predetermined value Gb within a period from when the accelerator manipulation amount ACC exceeds the predetermined amount Ab to when a predetermined time has elapsed. In short, any condition may be used as long as it is determined that the gear stops being shifted by determining that the vehicle 10 starts being accelerated by depression of the accelerator pedal 16 based on the accelerator manipulation amount ACC and the vehicle acceleration G.

It may be determined that the gear starts being shifted when the condition I and only one of the conditions II and III are met.

It may be determined that the gear stops being shifted when the condition I and only the conditions V and VI of the conditions V to VII are met.

It may be determined that the gear stops being shifted when the condition I and only the condition VII of the conditions V to VII are met.

While maintaining step S105 of Fig. 2, the condition II or III may be omitted.

While maintaining step S101 of Fig. 2, step S105 of Fig. 2 may be omitted. In this configuration, when the condition IV is not met (step S103: NO), the execution determination procedure is temporarily suspended while maintaining the current state. That is, if the vehicle speed limiting control is being executed, the execution is continued, and if the vehicle speed limiting control has been cancelled, the cancellation is continued.

The present invention may be applied to a vehicle with a transmission having two, three, or four gears or to a vehicle with a transmission having six or more gears.

## Claims

1. An apparatus for limiting the speed of a vehicle (10), wherein the vehicle includes an internal combustion engine (11), a transmission (12) having a plurality of gears, a clutch mechanism (15) located between an output shaft (11a) of the engine and an input shaft (12b) of the transmission (12), a clutch manipulation member (17) that, when the gear is shifted, switches the operating state of the clutch mechanism (15) to a disengaged state in which the power transmission between the output shaft (11a) and the input shaft (12b) is cancelled, and detection means (25) for detecting whether the clutch manipulation mechanism (17) is being manipulated, the apparatus comprising:
vehicle speed limiting means that executes vehicle speed limiting control for limiting the travel speed (SPD) of the vehicle (10) through limitation on the engine power output such that the travel speed (SPD) does not exceed an upper speed limit (Lim); and
cancelling means that cancels the vehicle speed limiting control executed by the vehicle speed limiting means when a predetermined cancelation condition is met, the cancellation condition including a clutch condition that a detection result of the detection means indicates that the clutch manipulation member (17) is being manipulated,
the apparatus being **characterized by** further comprising determination means that determines that the gear is being shifted when a predetermined additional condition is met, wherein, when the clutch condition and the additional condition are both met, the cancellation means cancels the vehicle speed limiting control executed by the vehicle speed limiting means;
and wherein in a state where it is determined that the gear is being shifted, the determination means determines that the gear stops being shifted based on at least one of a manipulation amount of an accelerator (24), which is used for adjusting the engine power output, in a direction increasing the engine power output and the acceleration of the vehicle.

2. The apparatus according to claim 1, being **characterized in that** the determination means includes, as the condition for determining that the gear stops being shifted, a condition that the manipulation amount of the accelerator (24) is greater than a first predetermined amount and the vehicle acceleration exceeds a first predetermined value.

3. The apparatus according to claim 2, being **characterized in that** the additional condition includes a condition that the manipulation amount of the accelerator (24) is less than a second predetermined amount that is less than the first predetermined amount.

4. The apparatus according to claim. 2 or 3, being **characterized in that** the additional condition includes a condition that the vehicle acceleration (G) is less than a second predetermined value that is less than the first predetermined value.

5. An apparatus for limiting the speed of a vehicle (10), wherein the vehicle includes an internal combustion engine (11), a transmission (12) having a plurality of gears, a clutch mechanism (15) located between an output shaft (11a) of the engine and an input shaft (12b) of the transmission (12), a clutch manipulation member (17) that, when the gear is shifted, switches the operating state of the clutch mechanism (15) to a disengaged state in which the power transmission between the output shaft (11a) and the input shaft (12b) is cancelled, and detection means (25) for detecting whether the clutch manipulation mechanism (19) is being manipulated, the apparatus comprising:
vehicle speed limiting means that executes vehicle speed limiting control for limiting the travel speed (SPD) of the vehicle (10) through limitation on the engine power output such that the travel speed (SPD) does not exceed an upper speed limit (Lim); and
cancelling means that cancels the vehicle speed limiting control executed by the vehicle speed limiting means when a predetermined cancelation condition is met, the cancelation condition including a clutch condition that a detection result of the detection means indicates that the clutch manipulation member (17) is being manipulated,
the apparatus being **characterized by** further comprising determination means that determines that the gear is being shifted when a predetermined additional condition is met, wherein, when the clutch condition and the additional condition are both met, the cancellation means cancels the vehicle speed limiting control executed by the vehicle speed limiting means and wherein the determination means determines
whether the additional condition is met based on at least one of a manipulation amount of an accelerator (24), which is used for adjusting the engine power output, in a direction increasing the engine power output and the acceleration (G) of the vehicle.

6. The apparatus according to claim 5, **characterized in that** the additional condition includes a condition that the manipulation amount of the accelerator (24) is less than a predetermined amount.

7. The apparatus according to claim 5, **characterized in that** the additional condition includes a condition that the
vehicle acceleration (G) is less than a predetermined value.

8. An apparatus for limiting the speed of a vehicle (10), wherein the vehicle includes an internal combustion engine (11), a transmission (12) having a plurality of gears, a clutch mechanism (15) located between an output shaft (11a) of the engine and an input shaft of the transmission (12b), a clutch manipulation member (17) that, when the gear is shifted, switches the operating state of the clutch mechanism (15) to a disengaged state in which the power transmission between the output shaft (11a) and the input shaft (12b) is cancelled, and detection means (25) for detecting whether the clutch manipulation mechanism (17) is being manipulated, the apparatus comprising:
vehicle speed limiting means that executes vehicle speed limiting control for limiting the travel speed (SPD) of the vehicle (10) through limitation on the engine power output such that the travel speed (SPD) does not exceed an upper speed limit (Lim); and
cancelling means that cancels the vehicle speed limiting control executed by the vehicle speed limiting means when a predetermined cancelation condition is met, the cancelation condition including a clutch condition that a detection result of the detection means indicates that the clutch manipulation member (17) is being manipulated,
the apparatus being **characterized by** further comprising determination means that determines that the gear is being shifted when a predetermined additional condition is met, wherein, when the clutch condition and the additional condition are both met, the cancellation means cancels the vehicle speed limiting control executed by the vehicle speed limiting means and wherein, regarding the relationship among
the rotational speed (NE) of the output shaft (11a) of the engine (10), an index value of the rotational speed of the output shaft (12a) of the transmission (12), and the gear selected in the transmission, the determination means includes, as the condition for determining that the gear stops being shifted, a condition that there is a small difference between the actual state of the relationship and the relationship that would be established when assuming that the operating state of the clutch mechanism (15) allows power transmission to be performed.

## Patentansprüche

1. Vorrichtung zum Begrenzen der Geschwindigkeit eines Fahrzeugs (10), wobei das Fahrzeug einen Verbrennungsmotor (11), ein Getriebe (12) mit einer Vielzahl von Gängen, einen Kupplungsmechanismus (15), der zwischen einer Ausgangswelle (11a) des Motors und einer Eingangswelle (12b) des Getriebes (12) liegt, ein Kupplungsbetätigungselement (17), das, wenn der Gang geschaltet ist, den Betriebszustand des Kupplungsmechanismus (15) zu einem freigegebenen Zustand wechselt, in dem die Kraftübertragung zwischen der Ausgangswelle (11a) und der Eingangswelle (12b) aufgehoben ist, und eine Erfassungseinrichtung (25) enthält, um zu erfassen, ob der Kupplungsbetätigungsmechanismus (17) betätigt wird, wobei die Vorrichtung aufweist:
eine Fahrzeuggeschwindigkeitsbegrenzungseinrichtung, die eine Fahrzeuggeschwindigkeitsbegrenzungssteuerung ausführt, um die Fahrgeschwindigkeit (SPD) des Fahrzeugs (10) durch Begrenzen der Motorausgangsleistung zu begrenzen, so dass die Fahrgeschwindigkeit (SPD) eine obere Geschwindigkeitsgrenze (Lim) nicht übersteigt; und
eine Aufhebungseinrichtung, die die von der Fahrzeuggeschwindigkeitsbegrenzungseinrichtung ausgeführten Fahrzeuggeschwindigkeitsbegrenzungssteuerung aufhebt, wenn eine vorbestimmte Aufhebungsbedingung erfüllt ist, wobei die Aufhebungsbedingung eine Kupplungsbedingung umfasst, dass ein Erfassungsergebnis der Erfassungseinrichtung anzeigt, dass das Kupplungsbetätigungselement (17) betätigt wird,
wobei die Vorrichtung ferner **gekennzeichnet ist durch** Aufweisen einer Bestimmungseinrichtung, die bestimmt, dass der Gang geschaltet wird, wenn eine vorbestimmte Zusatzbedingung erfüllt ist, wobei, wenn die Kupplungsbedingung und die Zusatzbedingung beide erfüllt sind, die Aufhebungseinrichtung, die von der Fahrzeuggeschwindigkeitsbegrenzungseinrichtung ausgeführte Fahrzeuggeschwindigkeitsbegrenzungssteuerung aufhebt;
und wobei, in einem Zustand, in dem bestimmt ist, dass der Gang geschaltet wird, die Bestimmungseinrichtung bestimmt, dass das Schalten des Gangs gestoppt wird, auf der Grundlage mindestens eines von einem Betätigungsbetrag eines Beschleunigers (24), der verwendet wird, um die Motorausgangsleistung anzupassen, in eine Richtung, in der die Motorausgangsleistung und die Beschleunigung des Fahrzeugs erhöht werden.

2. Vorrichtung nach Anspruch 1, **dadurch gekennzeichnet, dass** die Bestimmungseinrichtung, als die Bedingung zum Bestimmen, dass das Schalten des Gangs gestoppt wird, eine Bedingung umfasst, dass der Betätigungsbetrag des Beschleunigers (24) größer ist als ein erster vorbestimmter Betrag und die Fahrzeugbeschleunigung einen ersten vorbestimmten Wert übersteigt.

3. Vorrichtung nach Anspruch 2, **dadurch gekennzeichnet, dass** die Zusatzbedingung eine Bedingung umfasst, dass der Betätigungsbetrag des Beschleunigers (24) geringer ist als ein zweiter vorbestimmter Betrag, der geringer ist als der erste vorbestimmte Betrag.

4. Vorrichtung nach Anspruch 2 oder 3, **dadurch gekennzeichnet, dass** die Zusatzbedingung eine Bedingung umfasst, dass die Fahrzeugbeschleunigung (G) geringer ist als ein zweiter vorbestimmter Wert, der geringer ist als der erste vorbestimmte Wert.

5. Vorrichtung zum Begrenzen der Geschwindigkeit eines Fahrzeugs (10), wobei das Fahrzeug einen Verbrennungsmotor (11), ein Getriebe (12) mit einer Vielzahl von Gängen, einen Kupplungsmechanismus (15), der zwischen einer Ausgangswelle (11a) des Motors und einer Eingangswelle (12b) des Getriebes (12) liegt, ein Kupplungsbetätigungselement (17), das, wenn der Gang geschaltet ist, den Betriebszustand des Kupplungsmechanismus (15) zu einem freigegebenen Zustand schaltet, in dem die Kraftübertragung zwischen der Ausgangswelle (11a) und der Eingangswelle (12b) aufgehoben ist, und eine Erfassungseinrichtung (25) umfasst, um zu erfassen, ob der Kupplungsbetätigungsmechanismus (17) betätigt wird, wobei die Vorrichtung aufweist:
eine Fahrzeuggeschwindigkeitsbegrenzungseinrichtung, die eine Fahrzeuggeschwindigkeitsbegrenzungssteuerung ausführt, um die Fahrgeschwindigkeit (SPD) des Fahrzeugs (10) durch Begrenzung der Motorausgangsleistung zu begrenzen, so dass die Fahrgeschwindigkeit (SPD) eine obere Geschwindigkeitsgrenze (Lim) nicht übersteigt; und
eine Aufhebungseinrichtung, die die von der Fahrzeuggeschwindigkeitsbegrenzungseinrichtung ausgeführten Fahrzeuggeschwindigkeitsbegrenzungssteuerung aufhebt, wenn eine vorbestimmte Aufhebungsbedingung erfüllt ist, wobei die Aufhebungsbedingung eine Kupplungsbedingung umfasst, dass ein Erfassungsergebnis der Erfassungseinrichtung anzeigt, dass das Kupplungsbetätigungselement (17) betätigt wird, wobei
die Vorrichtung ferner **gekennzeichnet ist durch** Aufweisen einer Bestimmungseinrichtung, die bestimmt, dass der Gang geschaltet wird, wenn eine vorbestimmte Zusatzbedingung erfüllt ist, wobei, wenn die Kupplungsbedingung und die Zusatzbedingung beide erfüllt sind, die Aufhebungseinrichtung die von der Fahrzeuggeschwindigkeitsbegrenzungseinrichtung ausgeführte Fahrzeuggeschwindigkeitsbegrenzungssteuerung aufhebt, und wobei die Bestimmungseinrichtung bestimmt, ob die Zusatzbedingung erfüllt ist, auf der Grundlage von mindestens einem von einem Betätigungsbetrag eines Beschleunigers (24), der verwendet wird, um die Motorausgangsleistung anzupassen, in eine Richtung, in der die Motorausgangsleistung und die Beschleunigung (G) des Fahrzeugs erhöht werden.

6. Vorrichtung nach Anspruch 5, **dadurch gekennzeichnet, dass** die Zusatzbedingung eine Bedingung umfasst, dass der Betätigungsbetrag des Beschleunigers (24) geringer ist als ein vorbestimmter Betrag.

7. Vorrichtung nach Anspruch 5, **dadurch gekennzeichnet, dass** die Zusatzbedingung eine Bedingung umfasst, dass die Fahrzeugbeschleunigung (G) geringer ist als ein vorbestimmter Wert.

8. Vorrichtung zum Begrenzen der Geschwindigkeit eines Fahrzeugs (10), wobei das Fahrzeug einen Verbrennungsmotor (11), ein Getriebe (12) mit einer Vielzahl von Gängen, einen Kupplungsmechanismus (15), der zwischen einer Ausgangswelle (11a) des Motors und einer Eingangswelle des Getriebes (12b) liegt, ein Kupplungsbetätigungselement (17), das, wenn der Gang geschaltet ist, den Betriebszustand des Kupplungsmechanismus (15) zu einem freigegebenen Zustand wechselt, in dem die Leistungsübertragung zwischen der Ausgangswelle (11a) und der Eingangswelle (12b) aufgehoben ist, und eine Erfassungseinrichtung (25) umfasst, um zu erfassen, ob der Kupplungsbetätigungsmechanismus (17) betätigt wird, wobei die Vorrichtung aufweist:
eine Fahrzeuggeschwindigkeitsbegrenzungseinrichtung, die eine Fahrzeuggeschwindigkeitsbegrenzungssteuerung ausführt, um die Fahrgeschwindigkeit (SPD) des Fahrzeugs (10) durch Begrenzen der Motorausgangsleistung zu begrenzen, so dass die Fahrgeschwindigkeit (SPD) eine obere Geschwindigkeitsgrenze (Lim) nicht übersteigt; und
eine Aufhebungseinrichtung, die die von der Fahrzeuggeschwindigkeitsbegrenzungseinrichtung ausgeführte Fahrzeuggeschwindigkeitsbegrenzungssteuerung aufhebt, wenn eine vorbestimmte Aufhebungsbedingung erfüllt ist, wobei die Aufhebungsbedingung eine Kupplungsbedingung umfasst, dass ein Erfassungsergebnis der Erfassungseinrichtung anzeigt, dass das Kupplungsbetätigungselement (17) betätigt wird, wobei
die Vorrichtung ferner **gekennzeichnet ist durch** Aufweisen einer Bestimmungseinrichtung, die bestimmt, dass der Gang geschaltet wird, wenn eine vorbestimmte Zusatzbestimmung erfüllt ist, wobei, wenn die Kupplungsbedingung und die Zusatzbedingung beide erfüllt sind, die Aufhebungseinrichtung, die von der Fahrzeuggeschwindigkeitsbegrenzungseinrichtung ausgeführten Fahrzeuggeschwindigkeitsbegrenzungssteuerung aufhebt, und wobei, bzgl. der Beziehung zwischen der Rotationsgeschwindigkeit (NE) der Ausgangswelle (11a) des Motors (10), einem Indexwert der Rotationsgeschwindigkeit der Ausgangswelle (12a) des Getriebes (12), und des in dem Getriebe ausgewählten Ganges, die Bestimmungseinrichtung, als die Bedingung zum Bestimmen, dass das Schalten des Ganges gestoppt wird, eine Bedingung umfasst, dass es eine geringe Differenz zwischen dem Ist-Zustand der Beziehung und der Beziehung gibt, die realisiert werden würde, wenn davon ausgegangen wird, dass der Betriebszustand des Kupplungsmechanismus (15) ein Durchführen einer Leistungsübertragung erlaubt.

## Revendications

1. Appareil permettant de limiter la vitesse d'un véhicule (10), où le véhicule comporte un moteur à combustion interne (11), une transmission (12) ayant une pluralité de rapports de vitesse, un mécanisme d'embrayage (15) situé entre un arbre de sortie (11a) du moteur et un arbre d'entrée (12b) de la transmission (12), un élément de manipulation d'embrayage (17) qui, lors du changement du rapport de vitesse, commute l'état de fonctionnement du mécanisme d'embrayage (15) vers un état débrayé dans lequel la transmission de puissance entre l'arbre de sortie (11a) et l'arbre d'entrée (12b) est annulée, et un moyen de détection (25) pour détecter si le mécanisme de manipulation d'embrayage (17) est en train d'être manipulé, l'appareil comprenant
un moyen de limitation de vitesse de véhicule qui exécute une commande de limitation de vitesse de véhicule pour limiter la vitesse de déplacement (SPD) du véhicule (10) par limitation de la sortie de puissance du moteur de sorte que la vitesse de déplacement (SPD) ne dépasse pas une limite supérieure de vitesse (Lim) ; et
un moyen d'annulation qui annule la commande de limitation de vitesse de véhicule exécutée par le moyen de limitation de vitesse de véhicule lorsqu'une condition d'annulation prédéterminée est satisfaite, la condition d'annulation comportant une condition d'embrayage où un résultat de détection du moyen de détection indique que l'élément de manipulation d'embrayage (17) est en train d'être manipulé,
l'appareil étant **caractérisé en ce qu'**il comprend en outre un moyen de détermination qui détermine que le rapport de vitesse change lorsqu'une condition supplémentaire prédéterminée est satisfaite, où, lorsque la condition d'embrayage et la condition supplémentaire sont toutes deux satisfaites, le moyen d'annulation annule la commande de limitation de vitesse de véhicule exécutée par le moyen de limitation de vitesse de véhicule ;
et où lorsqu'il est déterminé que le rapport de vitesse change, le moyen de détermination détermine l'arrêt du changement du rapport de vitesse sur la base d'au moins l'une d'une quantité de manipulation d'un accélérateur (24), qui est utilisée pour régler la sortie de puissance du moteur, dans un sens augmentant la sortie de puissance du moteur et de l'accélération du véhicule.

2. Appareil selon la revendication 1, étant **caractérisé en ce que** le moyen de détermination comporte, comme étant la condition pour déterminer l'arrêt du changement du rapport de vitesse, une condition où la quantité de manipulation de l'accélérateur (24) est supérieure à une première quantité prédéterminée et l'accélération du véhicule dépasse une première valeur prédéterminée.

3. Appareil selon la revendication 2, étant **caractérisé en ce que** la condition supplémentaire comporte une condition où la quantité de manipulation de l'accélérateur (24) est inférieure à une deuxième quantité prédéterminée qui est inférieure à la première quantité prédéterminée.

4. Appareil selon la revendication 2 ou 3, étant **caractérisé en ce que** la condition supplémentaire comporte une condition où l'accélération (G) du véhicule est inférieure à une deuxième valeur prédéterminée qui est inférieure à la première valeur prédéterminée.

5. Appareil permettant de limiter la vitesse d'un véhicule (10), où le véhicule comporte un moteur à combustion interne (11), une transmission (12) ayant une pluralité de rapports de vitesse, un mécanisme d'embrayage (15) situé entre un arbre de sortie (11a) du moteur et un arbre d'entrée (12b) de la transmission (12), un élément de manipulation d'embrayage (17) qui, lors du changement du rapport de vitesse, commute l'état de fonctionnement du mécanisme d'embrayage (15) vers un état débrayé dans lequel la transmission de puissance entre l'arbre de sortie (11a) et l'arbre d'entrée (12b) est annulée, et un moyen de détection (25) pour détecter si le mécanisme de manipulation d'embrayage (17) est en train d'être manipulé, l'appareil comprenant :
un moyen de limitation de vitesse de véhicule qui exécute une commande de limitation de vitesse de véhicule pour limiter la vitesse de déplacement (SPD) du véhicule (10) par limitation de la sortie de puissance du moteur de sorte que la vitesse de déplacement (SPD) ne dépasse pas une limite supérieure de vitesse (Lim) ; et
un moyen d'annulation qui annule la commande de limitation de vitesse de véhicule exécutée par le moyen de limitation de vitesse de véhicule lorsqu'une condition d'annulation prédéterminée est satisfaite, la condition d'annulation comportant une condition d'embrayage où un résultat de détection du moyen de détection indique que l'élément de manipulation d'embrayage (17) est en train d'être manipulé,
l'appareil étant **caractérisé en ce qu'**il comprend en outre un moyen de détermination qui détermine que le rapport de vitesse change lorsqu'une condition supplémentaire prédéterminée est satisfaite, où, lorsque la condition d'embrayage et la condition supplémentaire sont toutes deux satisfaites, le moyen d'annulation annule la commande de limitation de vitesse de véhicule exécutée par le moyen de limitation de vitesse de véhicule et où le moyen de détermination détermine si la condition supplémentaire est satisfaite sur la base d'au moins l'une d'une quantité de manipulation d'un accélérateur (24), qui est utilisée pour régler la sortie de puissance du moteur, dans un sens augmentant la sortie de puissance du moteur et de l'accélération (G) du véhicule.

6. Appareil selon la revendication 5, **caractérisé en ce que** la condition supplémentaire comporte une condition où la quantité de manipulation de l'accélérateur (24) est inférieure à une quantité prédéterminée.

7. Appareil selon la revendication 5, **caractérisé en ce que** la condition supplémentaire comporte une condition où l'accélération (G) du véhicule est inférieure à une valeur prédéterminée.

8. Appareil permettant de limiter la vitesse d'un véhicule (10), où le véhicule comporte un moteur à combustion interne (11), une transmission (12) ayant une pluralité de rapports de vitesse, un mécanisme d'embrayage (15) situé entre un arbre de sortie (11a) du moteur et un arbre d'entrée (12b) de la transmission (12), un élément de manipulation d'embrayage (17) qui, lors du changement du rapport de vitesse, commute l'état de fonctionnement du mécanisme d'embrayage (15) vers un état débrayé dans lequel la transmission de puissance entre l'arbre de sortie (11a) et l'arbre d'entrée (12b) est annulée, et un moyen de détection (25) pour détecter si le mécanisme de manipulation d'embrayage (17) est en train d'être manipulé, l'appareil comprenant :
un moyen de limitation de vitesse de véhicule qui exécute une commande de limitation de vitesse de véhicule pour limiter la vitesse de déplacement (SPD) du véhicule (10) par limitation de la sortie de puissance du moteur de sorte que la vitesse de déplacement (SPD) ne dépasse pas une limite supérieure de vitesse (Lim) ; et
un moyen d'annulation qui annule la commande de limitation de vitesse de véhicule exécutée par le moyen de limitation de vitesse de véhicule lorsqu'une condition d'annulation prédéterminée est satisfaite, la condition d'annulation comportant une condition d'embrayage où un résultat de détection du moyen de détection indique que l'élément de manipulation d'embrayage (17) est en train d'être manipulé,
l'appareil étant **caractérisé en ce qu'**il comprend en outre un moyen de détermination qui détermine que le rapport de vitesse change lorsqu'une condition supplémentaire prédéterminée est satisfaite, où, lorsque la condition d'embrayage et la condition supplémentaire sont toutes deux satisfaites, le moyen d'annulation annule la commande de limitation de vitesse de véhicule exécutée par le moyen de limitation de vitesse de véhicule et où, en ce qui concerne la relation entre la vitesse de rotation (NE) de l'arbre de sortie (11a) du moteur (10), une valeur d'indice de la vitesse de rotation de l'arbre de sortie (12a) de la transmission (12), et le rapport de vitesse sélectionné dans la transmission, le moyen de détermination comporte, comme étant la condition pour déterminer l'arrêt du changement du rapport de vitesse, une condition qu'il existe une petite différence entre l'état réel de la relation et la relation qui sera établie en supposant que l'état de fonctionnement du mécanisme d'embrayage (15) permet la réalisation de la transmission de puissance.
